# EUROPÄISCHE PATENTANMELDUNG

(11) **EP 3 398 495 A1**
(43) Veröffentlichungstag der Anmeldung: **07.11.2018**
(21) Anmeldenummer: 18169867.1
(22) Anmeldetag: 27.04.2018
(51) Int. Cl.: A47J 43/046, A47J 43/07, A47J 27/00

(54) **VERFAHREN ZUM BETRIEB EINER KÜCHENMASCHINE**

(30) Priorität: 04.05.2017 DE 102017109584
(71) Anmelder: Vorwerk & Co. Interholding GmbH, 42275 Wuppertal (DE)
(72) Erfinder: Hilgers, Stefan, 45357 Essen (DE); Könnings, Maximilian, 8032 Zürich (CH); Yan, Wenjie, 40476 Düsseldorf (DE); Resende, Maria, 1500-431 Lissabon (PT); Sickert, Michael, 58256 Ennepetal (DE)
(74) Vertreter: Müller, Enno

(57) **Zusammenfassung**

Die Erfindung betrifft ein Verfahren zum Betrieb einer Küchenmaschine (1) mit einem einen Elektromotor aufweisenden Basisgerät (2) und einem an einer Gefäßaufnahme des Basisgerätes (2) anordenbaren Zubereitungsgefäß (3), wobei der Gefäßaufnahme eine Wägeeinrichtung (4) zugeordnet ist, welche das Gewicht des Zubereitungsgefäßes (3) aufnimmt, wobei eine Recheneinrichtung der Küchenmaschine (1) aus einem mittels der Wägeeinrichtung (4) gemessenen Messwert ein Gewicht ermittelt. Um die Wägeeinrichtung (4) vorteilhaft zur Erkennung eines aktuellen Zustandes der Küchenmaschine (1) zu nutzen, wird vorgeschlagen, dass die Recheneinrichtung aus mindestens zwei zu verschiedenen Zeitpunkten ermittelten Gewichten einen zeitlichen Gewichtsgradienten ermittelt.

## Beschreibung

### Gebiet der Technik

Die Erfindung betrifft ein Verfahren zum Betrieb einer Küchenmaschine mit einem einen Elektromotor aufweisenden Basisgerät und einem an einer Gefäßaufnahme des Basisgerätes anordenbaren Zubereitungsgefäß, wobei der Gefäßaufnahme eine Wägeeinrichtung zugeordnet ist, welche das Gewicht des Zubereitungsgefäßes aufnimmt, wobei eine Recheneinrichtung der Küchenmaschine aus einem von der Wägeeinrichtung gemessenen Messwert ein Gewicht ermittelt.

Des Weiteren betrifft die Erfindung eine elektromotorisch betriebene Küchenmaschine mit einem einen Elektromotor aufweisenden Basisgerät, einer Recheneinrichtung und einem an einer Gefäßaufnahme des Basisgerätes anordenbaren Zubereitungsgefäß, wobei der Gefäßaufnahme eine ein Gewicht des Zubereitungsgefäßes aufnehmende Wägeeinrichtung zugeordnet ist.

### Stand der Technik

Küchenmaschinen der vorgenannten Art sind im Stand der Technik hinreichend bekannt. Es handelt sich um Küchenmaschinen zum Verarbeiten von Nahrungsmitteln, welche eine Wägeeinrichtung mit einem kraftaufnehmenden Element aufweisen, die ein Gewicht von in einem Zubereitungsgefäß befindlichen Nahrungsmitteln ermittelt. Beim Wiegevorgang wird das Zubereitungsgefäß von dem kraftaufnehmenden Element getragen, welches seinerseits mit dem Basisgerät verbunden ist. Das kraftaufnehmende Element ist beispielsweise ein zwischen zwei relativ zueinander verlagerbaren Lagerbereichen des Basisgerätes angeordneter Wägebalken mit darauf angebrachten Dehnungsmessstreifen, deren Signal von einer elektronischen Schaltung ausgewertet werden kann. Somit lässt sich ein in dem Zubereitungsgefäß befindliches Zubereitungsgut wiegen.

Die Druckschrift DE 10 2009 059 242 A1 offenbart beispielsweise eine Küchenmaschine mit einer Wägeeinrichtung, die einen Wägebalken aufweist, der an gegeneinander beweglichen Teilen einer Vorrichtung befestigt ist und zwischen den Befestigungsbereichen eine oder mehrere Kerbungen aufweist. Auf der Balkenoberseite ist ein Dehnungsmessstreifen angeordnet, welcher bei Gewichtsbelastung lokalen Dehnungen des Materials unterliegt, die eine Änderung seines Messwiderstandes bewirken. Die Widerstandsänderung des Dehnungsmessstreifens ist somit ein Maß für das Gewicht eines in dem Zubereitungsgefäß befindlichen Zubereitungsgutes.

### Zusammenfassung der Erfindung

Ausgehend von dem vorgenannten Stand der Technik ist es Aufgabe der Erfindung, eine Küchenmaschine der vorgenannten Art sowie ein Verfahren zu deren Betrieb vorteilhaft weiterzubilden, insbesondere dahingehend, dass mittels der Wägeeinrichtung auch Zustände der Küchenmaschine ermittelt werden können.

Zur Lösung der vorgenannten Aufgabe schlägt die Erfindung ein Verfahren vor, bei welchem die Recheneinrichtung der Küchenmaschine anhand mindestens zweier zu verschiedenen Zeitpunkten ermittelter Gewichte einen zeitlichen Gewichtsgradienten ermittelt.

Erfindungsgemäß beinhaltet das Verfahren somit nicht nur eine Bestimmung eines Gewichtes eines in dem Zubereitungsgefäß befindlichen Zubereitungsgutes, sondern vielmehr auch die Ermittlung eines zeitlichen Gewichtsgradienten, d. h. eine Änderung eines gemessenen Gewichtes über eine bestimmte Zeitspanne. Der Gewichtsgradient ist ein Maß dafür, wie schnell und um welchen Wert sich ein gemessenes Gewicht ändert. Dieser ermittelte zeitliche Gewichtsgradient kann dann wiederum herangezogen werden, um abnormale Zustände der Küchenmaschine zu messen, welche nicht einem üblichen Hinzufügen von Zubereitungsgut in das Zubereitungsgefäß oder einem üblichen Entnehmen von Zubereitungsgut aus dem Zubereitungsgefäß entsprechen.

Insbesondere wird vorgeschlagen, dass die Recheneinrichtung den Gewichtsgradienten mit einem definierten Referenzgradienten vergleicht, welcher eine zeitabhängige Gewichtsreduzierung durch Abheben der Küchenmaschine von einer Stellfläche charakterisiert. Beim Abheben der Küchenmaschine von einer Stellfläche kommt es zu einem zeitlichen Gewichtsgradienten, welcher sich deutlich von einem Gewichtsgradienten bei Einfüllen eines Zubereitungsgutes in das Zubereitungsgefäß bzw. Entnahme von Zubereitungsgut aus dem Zubereitungsgefäß unterscheidet. Beim Abheben der Küchenmaschine von einer Stellfläche wird die Wägeeinrichtung entlastet, so dass sich ein ermitteltes Gewicht mit einem negativen Gradienten ändert, der geringer ist als ein entsprechend definierter Referenzgradient. Der Referenzgradient unterschreitet eine zeitabhängige Gewichtsreduzierung durch Entnahme von Zubereitungsgut aus dem Zubereitungsgefäß und/oder Tennen des Zubereitungsgefäßes von der Küchenmaschine deutlich. Die Gewichtsgradienten bei Abheben der Küchenmaschine von einer Stellfläche und bei Entnahme von Zubereitungsgut aus dem Zubereitungsgefäß bzw. bei Trennen des Zubereitungsgefäßes von der Küchenmaschine sind allesamt negativ, so dass ein kleinerer Gewichtsgradient im Sinne der Erfindung eine stärkere Gewichtsabnahme bedeutet. Der Referenzgradient definiert dabei, welche Gewichtsreduzierung noch als einem üblichen Betrieb der Küchenmaschine zugehörig angesehen werden kann. Sofern es zu einer übermäßigen Abweichung von dem Referenzgradienten, insbesondere einer Unterschreitung desselben, kommt, kann auf ein Abheben der Küchenmaschine von einer Stellfläche geschlossen werden.

In diesem Zusammenhang wird insbesondere vorgeschlagen, dass der Referenzgradient geringer ist als ein bei Trennen des Zubereitungsgefäßes von dem Basisgerät auftretender Gewichtsgradient. Als Ausgangsgewicht für die Festlegung des Referenzgradienten kann entweder ein Leergewicht des Zubereitungsgefäßes oder ein Gesamtgewicht des Zubereitungsgefäßes inklusive des gegebenenfalls darin enthaltenen Zubereitungsgutes herangezogen werden. Im Verlaufe eines Betriebs der Küchenmaschine, beispielsweise während einer Abarbeitung mehrerer aufeinander folgender Rezeptschritte kann es somit besonders bevorzugt zu einer kontinuierlichen Neuberechnung des Referenzgradienten kommen. Der so definierte Referenzgradient kann dann mit einem aktuell ermittelten Gewichtsgradienten verglichen werden, um einen Zustand der Küchenmaschine festzustellen, welcher nicht einem üblichen Vorgang wie Befüllen bzw. Entleeren des Zubereitungsgefäßes während des Betriebs der Küchenmaschine entspricht.

Das Verfahren sieht dabei vor, dass bei Unterschreiten des Referenzgradienten durch den ermittelten Gewichtsgradienten auf ein Anheben der Küchenmaschine geschlossen wird. Da der Gewichtsgradient beim Anheben der Küchenmaschine sowie auch der zuvor definierte Referenzgradient beide negativ sind, bedeutet ein Unterschreiten, dass der Betrag des aktuell ermittelten Gewichtsgradienten größer ist als der Betrag des Referenzgradienten. Das gemessene Gewicht reduziert sich beim Anheben der Küchenmaschine somit in größerem Maße als in der definierten Referenzsituation, beispielsweise einem Trennen des Zubereitungsgefäßes von dem Basisgerät.

Es wird vorgeschlagen, dass für die Ermittlung des Gewichtsgradienten Messwerte herangezogen werden, deren Messzeitpunkte um höchstens 0,5 Sekunden beabstandet sind. Bei der Bemessung der Zeitpunkte, zu welchen jeweils ein aktuelles Gewicht ermittelt wird, ist eine kürzeste Zeitspanne zu wählen, innerhalb welcher sich üblicherweise Gewichtsänderungen vollziehen, die durch ein Hinzufügen oder Entnehmen von Zubereitungsgut, durch ein Trennen des Zubereitungsgefäßes von der Küchenmaschine oder auch durch ein Abheben der Küchenmaschine von einer Stellfläche entstehen. Bei einer Zugabe von Lebensmitteln in das Zubereitungsgefäß ändert sich das Gewicht üblicherweise nicht schlagartig, da das Zubereitungsgut üblicherweise eher langsam in das Zubereitungsgefäß gegeben wird, um beispielsweise ein Herausspritzen von Zubereitungsgut zu verhindern. Ebenso verhält es sich bei der Entnahme von Zubereitungsgut aus einem noch innerhalb der Küchenmaschine angeordneten Zubereitungsgefäß. Demgegenüber unterscheidet sich eine eher abrupt ablaufendes Trennen des Zubereitungsgefäßes von der Küchenmaschine bzw. ein Abheben der Küchenmaschine von einer Stellfläche. Somit kann eine Ursache der gemessenen Gewichtsänderung erkannt werden, indem aufeinanderfolgende Messzeitpunkte so gewählt werden, dass diese gegenüber einer Zeitspanne einer eher schleichenden Gewichtsreduzierung durch Entnahme von Zubereitungsgut aus dem Zubereitungsgefäß einen geringeren Abstand aufweisen. Insbesondere wird ein Abstand der Messzeitpunkte von höchstens 0,5 Sekunden vorgeschlagen, wobei auch kleinere Abstände gewählt werden können, beispielsweise Abstände von 0,4 Sekunden, 0,3 Sekunden, 0,2 Sekunden, 0,1 Sekunde oder noch kleinere Abstände. Somit lassen sich sprunghafte Gewichtsänderungen von eher stetig verlaufenden Gewichtsänderungen unterscheiden. Eine Unterscheidung zwischen einem Trennen des Zubereitungsgefäßes von der Küchenmaschine und einem Anheben der Küchenmaschine, welche beide sprunghafte Gewichtsänderungen verursachen, kann zusätzlich über den Betrag der Gewichtsreduzierung erfolgen, da das Zubereitungsgefäß, gefüllt oder ungefüllt, üblicherweise leichter ist als die Küchenmaschine selbst. Somit ist der in beiden Fällen negative Gewichtsgradient bei Abheben der Küchenmaschine von einer Stellfläche üblicherweise noch kleiner als der Gewichtsgradient bei Entnahme des Zubereitungsgefäßes aus der Küchenmaschine. Dies entspricht einem betragsmäßig größeren Gewichtsgradienten bei Abheben der Küchenmaschine im Gegensatz zu einem Gewichtsgradienten bei Trennen des Zubereitungsgefäßes von der Küchenmaschine.

Des Weiteren kann vorgesehen sein, dass nach Unterschreiten des Referenzgradienten zeitlich beabstandet mindestens zwei weitere Gewichtsgradienten ermittelt werden. Insbesondere wird dafür ein zeitlicher Abstand von mindestens 0,5 Sekunden vorgeschlagen. Es sind auch größere zeitliche Abstände empfehlenswert, beispielsweise Zeitabstände von 1 Sekunde, 2 Sekunden, 3 Sekunden, oder mehr. Durch diese Verfahrensführung werden weitere Gewichtsgradienten in einem zeitlichen Verlauf nach Feststellen eines Abhebens der Küchenmaschine von einer Stellfläche berechnet. Dadurch lassen sich vorteilhaft weitere Zustände der Küchenmaschine erkennen. Ein Unterschreiten eines Referenzgradienten durch einen aktuell berechneten Gewichtsgradienten kann dabei die zeitlich spätere Berechnung weiterer Gewichtsgradienten auslösen. Dadurch wird gezielt ein weiterer Gewichtsverlauf beobachtet, nachdem zuvor ein Abheben der Küchenmaschine von einer Stellfläche erkannt wurde. Durch diese Maßnahme kann ermittelt werden, ob der Elektromotor der Küchenmaschine aktuell angeschaltet oder ausgeschaltet ist. Dies ist möglich, da ein in Betrieb befindlicher Elektromotor Schwingungen und damit Kräfte auf das Gehäuse der Küchenmaschine überträgt, welche ebenfalls auf die Wägeeinrichtung wirken. Die insgesamt auf die Wägeeinrichtung wirkenden Kräfte unterscheiden sich somit bei ausgeschaltetem Elektromotor von den bei eingeschaltetem Elektromotor wirkenden Kräften.

Zur Erkennung eines Betriebsstatus des Elektromotors wird vorgeschlagen, dass bei Ermittlung zeitlich aufeinanderfolgender Gewichtsgradienten im Bereich des Wertes eines ein Anheben der Küchenmaschine charakterisierenden Gewichtsgradienten, insbesondere bei im Wesentlichen konstanten aufeinanderfolgenden Messwerten, auf einen Nichtbetrieb des Elektromotors geschlossen wird. Bei dieser Ausgestaltung folgt nach Unterschreiten des Referenzgradienten ein im Wesentlichen konstantes Messsignal. Aufgetragen in einem Widerstands-Zeit-Diagramm entspricht dies beispielsweise zunächst einem starken Abfall des Gewichts mit einem anschließenden Signalplateau. Bei Ermittlung eines solchen Verlaufs des Messwertes kann auf einen Nichtbetrieb des Elektromotors geschlossen werden. Aus dem weiteren Zeitverlauf des Messwertes - auch nach Unterschreiten des Referenzgradienten - können somit Zustände der Küchenmaschine erkannt werden, welche vorteilhaft für eine weitere Steuerung der Küchenmaschine verwendet werden können. Bei Nichtbetrieb des Elektromotors kommt es somit zu einem charakteristischen zeitlichen Verlauf des Messwertes, wobei ein gemessener Widerstand (oder Spannung) zunächst beispielsweise konstant bleibt bis die Küchenmaschine von einer Stellfläche abgehoben wird, und sodann abrupt auf ein Minimum sinkt, auf welchem der Messwert anschließend im Wesentlichen verbleibt. Die Erkenntnis, dass der Elektromotor ausgeschaltet ist, kann anschließend wiederum für weitere Maßnahmen verwendet werden. Hierzu wird später Weiteres erläutert.

Des Weiteren wird zunächst analog vorgeschlagen, dass bei Ermittlung zeitlich aufeinanderfolgender Gewichtsgradienten im Bereich des Wertes eines vor einem Unterschreiten des Referenzgradienten ermittelten Gewichtsgradienten auf einen Betrieb des Elektromotors geschlossen wird. Bei Betrieb des Elektromotors kommt es durch das Abheben der Küchenmaschine von einer Stellfläche zunächst ebenfalls zur Unterschreitung des Referenzgradienten, wobei anschließend aufgrund der Schwingungen des angeschalteten Elektromotors jedoch sodann wieder ein Anstieg des Gewichtsgradienten auf das zuvor ermittelte Maß erfolgt. Durch das Anheben der Küchenmaschine kommt es somit nur zu einem kurzzeitigen Absinken des Messwertes, d. h. ohne dass der Messwert auf einem ein Minimum kennzeichnenden Plateau verbleibt. Somit lässt sich anhand des weiteren zeitlichen Verlaufs des Gewichtes nach Anheben der Küchenmaschine ermitteln, ob der Elektromotor in Betrieb ist, oder nicht.

In Abhängigkeit davon wird des Weiteren vorgeschlagen, dass einem Nutzer bei Erkennen eines Nichtbetriebs des Elektromotors eine Option zum Einschalten eines Transportmodus und/oder zum Ausschalten der Küchenmaschine bereitgestellt wird, und/oder dass einem Nutzer bei Erkennen eines Betriebs des Elektromotors eine Option zum Ausschalten des Elektromotors bereitgestellt wird. Während eines laufenden Betriebs des Elektromotors wird es dadurch möglich, den Elektromotor unmittelbar, d. h. beispielsweise durch nur eine einzige Tastenbetätigung, abzuschalten, um ungewünschte Betriebszustände zu vermeiden. Sofern der Elektromotor nicht eingeschaltet ist, kann ein Nutzer auf ebenso einfache Art und Weise einen Transportmodus durch beispielsweise Bestätigung einer auf einem Display der Küchenmaschine vorgeschlagenen Aktion veranlassen, woraufhin sich die Küchenmaschine abschaltet. Dadurch ist es nicht mehr notwendig, den Transportmodus über eine detaillierte Menüführung der Küchenmaschine zu aktivieren. Ebenso kann auch ein vollständiges Ausschalten der Küchenmaschine veranlasst werden. Insgesamt kann bei Anheben der Küchenmaschine somit ein Ausschalten eines aktiven Elektromotors bewirkt werden, bzw. eine Transportsicherung oder ein Ausschalten der Küchenmaschine bei ausgeschaltetem Elektromotor.

Die Durchführung des erfindungsgemäßen Verfahrens kann mittels der Software der Küchenmaschine erreicht werden, wobei die zuvor erläuterte Recheneinrichtung die Gewichtsgradienten ermittelt und weiterverarbeitet. Es sind keine zusätzlichen Komponenten der Küchenmaschine erforderlich.

Schließlich wird mit der Erfindung neben dem zuvor beschriebenen Verfahren auch eine elektromotorisch betriebene Küchenmaschine vorgeschlagen, welche ein einen Elektromotor aufweisendes Basisgerät, eine Recheneinrichtung und ein an einer Gefäßaufnahme des Basisgerätes anordenbares Zubereitungsgefäß aufweist, wobei der Gefäßaufnahme eine ein Gewicht des Zubereitungsgefäßes aufnehmende Wägeeinrichtung zugeordnet ist, wobei die Recheneinrichtung ausgebildet und eingerichtet ist, ein zuvor beschriebenes Verfahren durchzuführen.

Wie zuvor erläutert, unterscheidet sich die erfindungsgemäße elektromotorisch betriebene Küchenmaschine von im Stand der Technik bekannten elektromotorisch betriebenen Küchenmaschinen durch die Recheneinrichtung, welche nun erfindungsgemäß ausgebildet und eingerichtet ist, einen zeitlichen Gewichtsgradienten aus mindestens zwei zu verschiedenen Zeitpunkten ermittelten Messwerten zu berechnen. Die weiteren Merkmale der Recheneinrichtung ergeben sich dabei wie zuvor in Bezug auf das Verfahren beschrieben. Insbesondere kann die Recheneinrichtung ausgebildet und eingerichtet sein, den Gewichtsgradienten mit einem definierten Referenzgradienten zu vergleichen, welcher eine zeitabhängige Gewichtsreduzierung bei Abheben der Küchenmaschine von einer Stellfläche charakterisiert.

### Kurze Beschreibung der Zeichnungen

Im Folgenden wird die Erfindung anhand von Ausführungsbeispielen näher erläutert. Es zeigen:
- Fig. 1: eine erfindungsgemäße Küchenmaschine in einer perspektivischen Ansicht,
- Fig. 2: die Küchenmaschine in einer teilweise geschnittenen seitlichen Ansicht,
- Fig. 3: einen vergrößerten Ausschnitt der Küchenmaschine gemäß Figur 2,
- Fig. 4: den in Figur 3 dargestellten Ausschnitt der Küchenmaschine bei einem Abheben der Küchenmaschine von einer Stellfläche,
- Fig. 5: ein Widerstands-Zeit-Diagramm bei Anheben der Küchenmaschine mit angeschaltetem Elektromotor,
- Fig. 6: ein Widerstands-Zeit-Diagramm bei Anheben der Küchenmaschine mit ausgeschaltetem Elektromotor,
- Fig. 7: ein Flussdiagramm eines erfindungsgemäßen Verfahrens zum Betrieb der Küchenmaschine.

### Beschreibung der Ausführungsformen

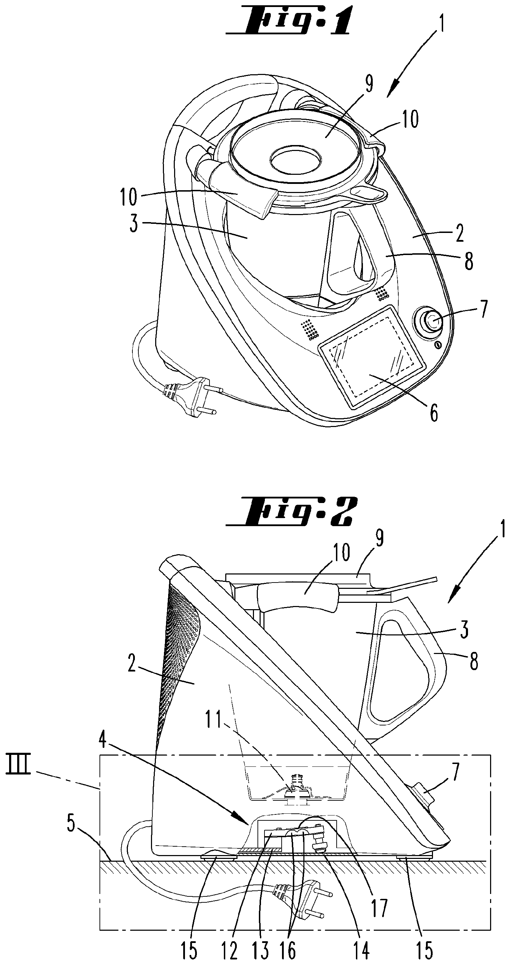

Figur 1 zeigt eine elektromotorisch betriebene Küchenmaschine 1, welche hier als kombiniertes Koch-Mix-Gerät ausgebildet ist. Die Küchenmaschine 1 weist ein Basisgerät 2 auf, mit welchem ein Zubereitungsgefäß 3 verbunden ist. Dem Zubereitungsgefäß 3 ist eine nicht dargestellte Heizeinrichtung zugeordnet, hier vorzugsweise in den Gefäßboden des Zubereitungsgefäßes 3 integriert. In dem Zubereitungsgefäß 3 ist des Weiteren ein Rührwerk 11 angeordnet, mit welchem in dem Zubereitungsgefäß 3 vorhandenes Zubereitungsgut zerkleinert, gerührt und/ oder auf andere Art und Weise zubereitet werden kann. Dem Zubereitungsgefäß 3 ist des Weiteren ein Deckel 9 zugeordnet, welcher mit Hilfe von Verriegelungselementen 10 mit dem Zubereitungsgefäß 3 fest verbunden werden kann. Das Zubereitungsgefäß 3 weist des Weiteren einen Griff 8 zum Ergreifen des Zubereitungsgefäßes 3 durch einen Nutzer auf. Des Weiteren verfügt das Basisgerät 2 über ein Display 6 zur Anzeige von Statusparametern der Küchenmaschine 1, Rezeptvorschlägen, aktuellen Parametern des in dem Zubereitungsgefäß 3 befindlichen Zubereitungsgutes und dergleichen. Ein Schalter 7, hier beispielsweise als Druck-DrehKnopf ausgebildet, dient zum An- und Ausschalten eines Elektromotors (nicht dargestellt) der Küchenmaschine 1 und/ oder der Küchenmaschine 1 insgesamt. Des Weiteren kann über den Schalter 7 eine Auswahl und Bestätigung eines auf dem Display 6 angezeigten Befehls oder Parameters erfolgen.

Figur 2 zeigt die Küchenmaschine 1 mit dem Zubereitungsgefäß 3 in einer teilweise aufgebrochenen Seitenansicht. Die Küchenmaschine 1 steht mit Standfüßen 15 auf einer Stellfläche 5, beispielsweise einer Arbeitsplatte einer Küche. Erkennbar ist in dieser Figur das Rührwerk 11, welches hier als Messersatz mit einer Mehrzahl von Messern ausgebildet ist. Das Rührwerk 11 rotiert um eine Rotationsachse, welche gleichzeitig eine Längsachse des Zubereitungsgefäßes 3 ist. In dem Basisgerät 2 der Küchenmaschine 1 ist unterhalb des Zubereitungsgefäßes 3 eine Wägeeinrichtung 4 angeordnet, welche an relativ zueinander verlagerbaren Lagerbereichen 13,14 der Küchenmaschine 1 gelagert ist. Die Wägeeinrichtung 4 weist einen Wägebalken 12 mit zwei parallel zueinander verlaufenden Kerbungen 16 auf. Durch die Kerbungen 16 entstehen materialgeschwächte Bereiche des Wägebalkens 12, welche eine Dehnung bzw. Stauchung des Wägebalkens 12 zulassen. Die Wägeeinrichtung 4 bzw. die Lagerbereiche 13,14 sind mit dem Gewicht des darüber angeordneten Zubereitungsgefäßes belastet, sodass es bei einer Änderung des Gewichtes, z. B. aufgrund eines Einfüllens von Zubereitungsgut, zu einer Dehnung bzw. Stauchung des Wägebalkens 12 kommt. Auf der Oberseite des Wägebalkens 12, von den Kerbungen 16 abgewandt, ist ein Dehnungsmessstreifen 17 angeordnet, dessen Widerstand sich bei einer Dehnung bzw. Stauchung des Wägebalkens 12 und damit auch des Dehnungsmessstreifens 17 ändert. Dieser Widerstand kann von einer Recheneinrichtung der Küchenmaschine 1 weiterverarbeitet und in ein Gewicht umgerechnet werden. Eine Detektion der Zug- und Druckspannungen mittels des Dehnungsmessstreifens ist im Einzelnen in der Veröffentlichung DE 10 2009 059 242 A1 beschrieben. Die darin gegebene Offenbarung der Funktionsweise der Wägeeinrichtung, inklusive verschiedener Ausführungsformen, gilt entsprechend auch hier für die dargestellte Küchenmaschine 1.

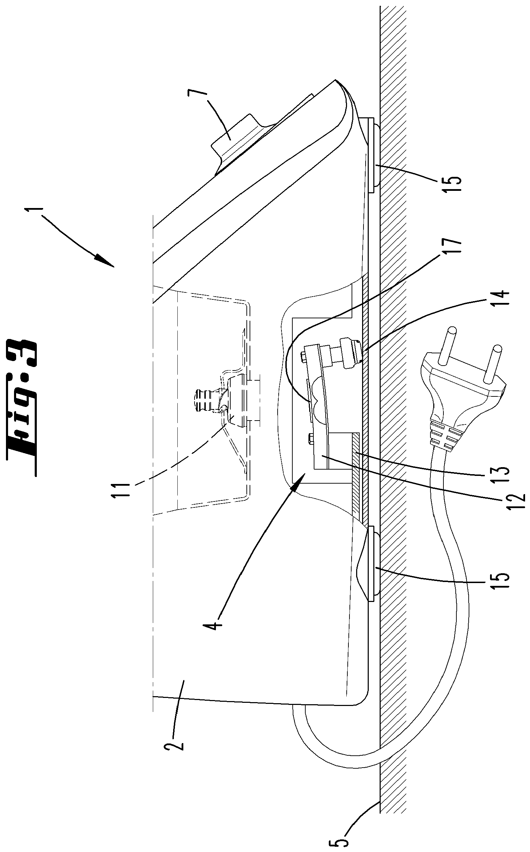

Figur 3 zeigt einen vergrößerten Teilbereich der Küchenmaschine 1 unterhalb des Zubereitungsgefäßes 3. In dem gezeigten, auf der Stellfläche 5 stehenden Zustand der Küchenmaschine 1, weist die Wägeeinrichtung 4, insbesondere der Wägebalken 12, eine Form und Stellung auf, welche zur Verdeutlichung übertrieben dargestellt ist. Die Küchenmaschine 1 steht mit ihren Standfüßen 15 auf der Stellfläche 5. Dadurch ist der an dem Gehäuse der Küchenmaschine 1 vorhandene Lagerbereich 14 vorgespannt und drückt einen Endbereich des Wägebalkens 12 nach oben, d. h. in Richtung des Zubereitungsgefäßes 3. Die Vorspannung des Wägebalkens 12 führt gleichzeitig zu einer Verformung des Dehnungsmessstreifens 17. Die Verformung des Dehnungsmessstreifens 17 führt wiederum zu einer Widerstandsänderung, welche mittels der Recheneinrichtung der Küchenmaschine 1 ausgewertet werden kann. Der Widerstand des Dehnungsmessstreifens 17 ist charakterisierend für den Kontakt der Küchenmaschine 1 mit der Stellfläche 5 und für das aktuelle Gewicht des Zubereitungsgefäßes 3 und gegebenenfalls darin befindlichem Zubereitungsgut. In üblicher Art und Weise kann bei auf der Stellfläche 5 stehender Küchenmaschine 1 somit ein innerhalb des Zubereitungsgefäßes 3 befindliches Zubereitungsgut gewogen werden.

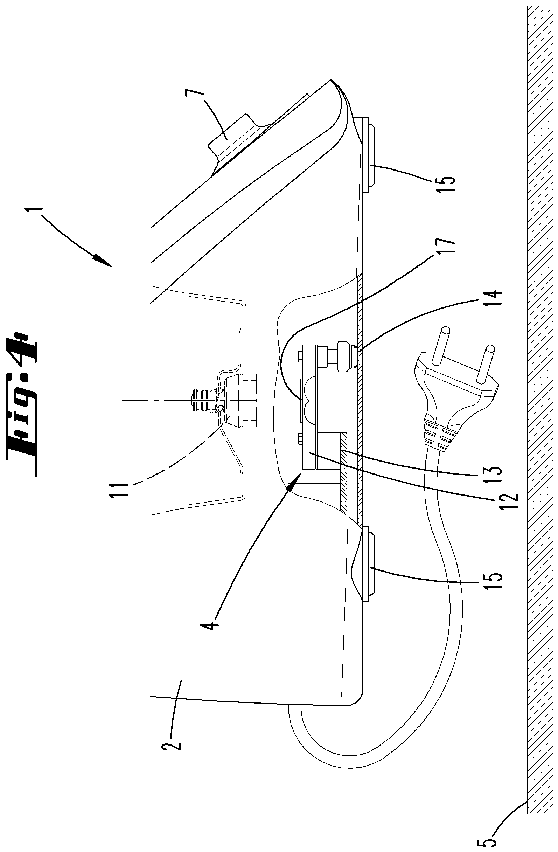

Zusätzlich ist die Wägeeinrichtung 4 auch geeignet, ein Abheben der Küchenmaschine 1 von der Stellfläche 5 zu ermitteln. Ein solches Abheben ist in Figur 4 dargestellt. Durch das Abheben der Standfüße 15 der Küchenmaschine 1 von der Stellfläche 5 kommt es zu einer Verlagerung des Lagerbereiches 14 relativ zu dem Lagerbereich 13 der Küchenmaschine 1. Entsprechend verformen sich der Wägebalken 12 und der darauf angeordnete Dehnungsmessstreifen 17. Diese Verformung ist in Figur 4 übertrieben dargestellt, um das Prinzip zu erläutern. Es versteht sich von selbst, dass die in den Figuren 3 und 4 dargestellten Krümmungen des Wägebalkens 12 nur exemplarisch zu verstehen sind. Selbstverständlich ist es auch möglich, dass der Wägebalken 12 in einem auf der Stellfläche 5 stehenden Zustand der Küchenmaschine 1 nicht gekrümmt ist, während es bei einem Abheben der Küchenmaschine 1 von der Stellfläche 5 zu einer Krümmung des Wägebalkens 12 kommt.

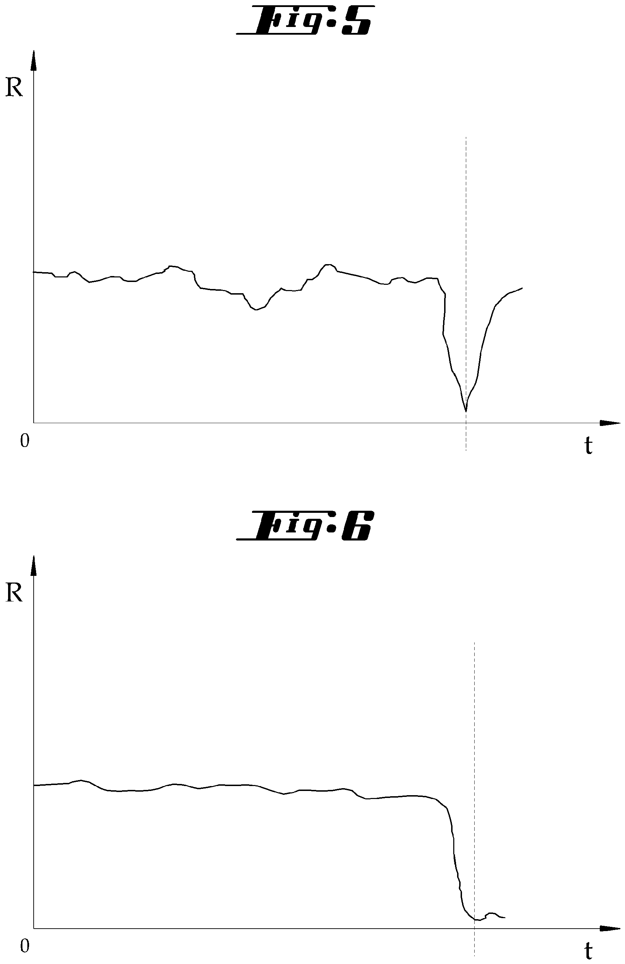

Die Wägeeinrichtung 4 der Küchenmaschine 1 kann nun erfindungsgemäß dazu verwendet werden, ein Abheben der Küchenmaschine 1 von der Stellfläche 5 zu detektieren. Dazu ermittelt die Recheneinrichtung der Küchenmaschine 1 aus mindestens zwei zu verschiedenen Zeitpunkten ermittelten Gewichtswerten sowie der betreffenden Zeitdifferenz einen zeitlichen Gewichtsgradienten. Der Gewichtsgradient ist definiert als eine Gewichtsdifferenz pro Zeitdifferenz und entspricht in einem Widerstands-Zeit-Diagramm einer (positiven oder negativen) Steigung eines Graphen. Der ermittelte Gewichtsgradient wird anschließend mit einem definierten Referenzgradienten verglichen, welcher bekanntermaßen bei einem Abheben der Küchenmaschine 1 von der Stellfläche 5 auftritt. Dieser Referenzgradient ist in einem Speicher der Küchenmaschine 1 hinterlegt. Für den Vergleich greift die Recheneinrichtung auf diesen Speicher zu. Der bei einem Abheben der Küchenmaschine 1 von der Stellfläche 5 auftretende Gewichtsgradient ist negativ, d. h. entspricht einer negativen Steigung eines Graphen im Widerstands-Zeit-Diagramm (R-t-Diagramm). Ein solches Diagramm ist in den Figuren 5 und 6 für unterschiedliche Betriebszustände der Küchenmaschine 1 dargestellt, nämlich in Figur 5 für eine Küchenmaschine 1 mit eingeschaltetem Elektromotor im Zeitpunkt des Abhebens der Küchenmaschine 1 von der Stellfläche 5 (gestrichelte senkrechte Linie) und in Figur 6 für eine Küchenmaschine 1 mit ausgeschaltetem Elektromotor während des Anhebens der Küchenmaschine 1 (gestrichelte senkrechte Linie).

Während des Betriebs der Küchenmaschine 1 werden in bestimmten Zeitabständen, beispielsweise alle 0,2 Sekunden, Gewichtsgradienten aus zwei zeitlich aufeinanderfolgenden Messwerten ermittelt, wobei die berechneten Gewichtsgradienten jeweils mit dem Referenzgradienten verglichen werden. Sofern ein errechneter (negativer) Gewichtsgradient geringer ist als der zuvor definierte (ebenfalls negative) Referenzgradient, wird auf ein Anheben der Küchenmaschine 1 geschlossen. In den in den Figuren 5 und 6 gezeigten Diagrammen entspricht ein solcher Gewichtsgradient, welcher ein Anheben der Küchenmaschine charakterisiert, einem plötzlichen starken Abfall des Graphen, welcher steiler ist als ein Abfall bei beispielsweise Trennen des Zubereitungsgefäßes 3 von dem Basisgerät 2.

Nach Erkennen des Anhebens der Küchenmaschine 1 kann des Weiteren ermittelt werden, ob zum Zeitpunkt des Anhebens der Küchenmaschine 1 der Elektromotor in Betrieb ist oder nicht. In Abhängigkeit davon können weitere Maßnahmen für die Küchenmaschine 1 vorgesehen sein. Zu diesem Zweck werden auch nach Erkennen des Anhebens der Küchenmaschine 1 weitere Gewichtsgradienten berechnet, wobei hierzu beispielsweise Messwerte in zeitlichen Abständen gemessen werden, die mindestens 0,5 Sekunden betragen. Durch die Fortsetzung der Messungen kann festgestellt werden, wie sich die Gewichtsgradienten nach dem Anheben der Küchenmaschine 1 weiter entwickeln. Dadurch kann ein Betriebszustand des Elektromotors der Küchenmaschine 1 erkannt werden, da der Elektromotor während des Betriebs Schwingungen auf die Küchenmaschine 1 überträgt, welche ebenso auch auf die Wägeeinrichtung 4 wirken. Daher unterscheiden sich die Gewichtsgradienten während des Betriebs des Elektromotors und während des Nichtbetriebs des Elektromotors voneinander.

Wie in Figur 5 dargestellt, kommt es bei laufendem Elektromotor der Küchenmaschine 1 durch das Anheben der Küchenmaschine 1 zunächst zu einem kurzzeitigen Abfall des von dem Dehnungsmessstreifen 17 gemessenen Widerstandes R, wobei der Widerstand R anschließend wieder in einen Bereich ansteigt, welcher ungefähr dem Wert vor dem Anheben der Küchenmaschine 1 entspricht. Sofern der Elektromotor dagegen, wie in Figur 6 dargestellt, beim Anheben der Küchenmaschine 1 nicht in Betrieb ist, kommt es nach Absinken des Widerstandes R nicht zu einem erneuten Anstieg. Vielmehr bildet sich nach dem Zeitpunkt des Anhebens der Küchenmaschine 1 ein Widerstandsplateau. Somit kann anhand des Verlaufs des Gewichtsgradienten über die Zeit t bestimmt werden, ob der Elektromotor der Küchenmaschine 1 derzeit läuft oder nicht. Ausgehend von dieser Information kann das Verhalten der Küchenmaschine 1 weiter gesteuert werden.

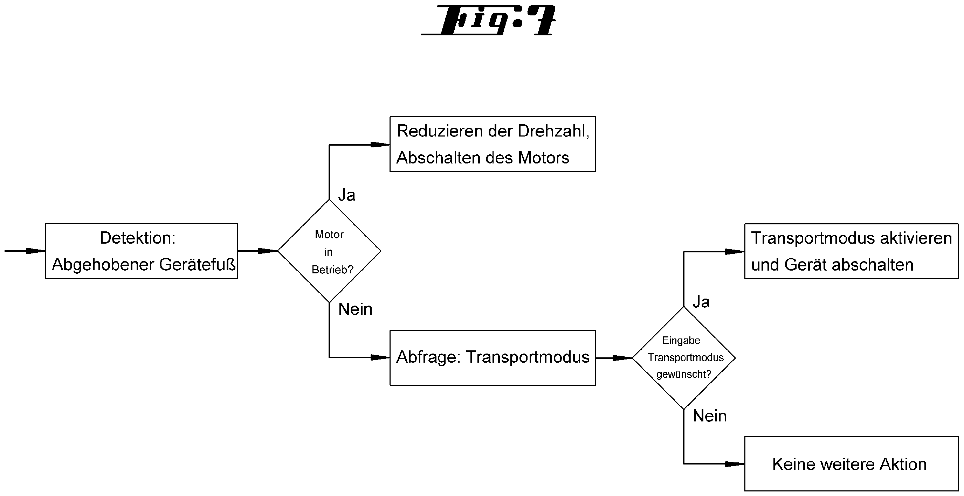

Figur 7 zeigt ein Flussdiagramm für das Verfahren zum Betrieb der Küchenmaschine 1 nach Detektion eines Abhebens der Küchenmaschine 1 von der Stellfläche 5. Sofern erkannt wurde, dass der Elektromotor der Küchenmaschine 1 in Betrieb ist, kann eine Steuereinrichtung der Küchenmaschine 1 automatisch eine Reduzierung der Drehzahl des Elektromotors oder gar ein Ausschalten des Elektromotors veranlassen. Gegebenenfalls wird einem Nutzer der Küchenmaschine 1 hierzu eine Option auf dem Display 6 angezeigt, welche er zum Ausschalten des Elektromotors auswählen und/ oder bestätigen kann. In dem Fall, dass der Elektromotor beim Anheben der Küchenmaschine 1 bereits ausgeschaltet ist, kann dem Nutzer eine Option zum Einschalten eines Transportmodus der Küchenmaschine 1 angezeigt werden und/ oder eine Option zum vollständigen Ausschalten der Küchenmaschine 1. Der Transportmodus kann beispielsweise eine Verriegelung des Zubereitungsgefäßes 3 mit dem Deckel 9 beinhalten, so dass die Küchenmaschine 1 transportiert werden kann, ohne dass das Zubereitungsgefäß 3 und/ oder der Deckel 9 von der Küchenmaschine 1 getrennt wird. Über das Display 6 kann der Nutzer nach Wunsch den Transportmodus aktivieren und die Küchenmaschine 1 abschalten. Alternativ kann er sich jedoch auch dazu entscheiden, keine weiteren Aktionen der Küchenmaschine 1 einzuleiten, so dass die Küchenmaschine 1 angeschaltet bleibt, jedoch der Elektromotor weiterhin ausgeschaltet ist.

### Liste der Bezugszeichen

- 1: Küchenmaschine
- 2: Basisgerät
- 3: Zubereitungsgefäß
- 4: Wägeeinrichtung
- 5: Stellfläche
- 6: Display
- 7: Schalter
- 8: Griff
- 9: Deckel
- 10: Verriegelungselement
- 11: Rührwerk
- 12: Wägebalken
- 13: Lagerbereich
- 14: Lagerbereich
- 15: Standfuß
- 16: Kerbung
- 17: Dehnungsmessstreifen

- R: Widerstand
- t: Zeit

## Patentansprüche

1. Verfahren zum Betrieb einer Küchenmaschine (1) mit einem einen Elektromotor aufweisenden Basisgerät (2) und einem an einer Gefäßaufnahme des Basisgerätes (2) anordenbaren Zubereitungsgefäß (3), wobei der Gefäßaufnahme eine Wägeeinrichtung (4) zugeordnet ist, welche das Gewicht des Zubereitungsgefäßes (3) aufnimmt, wobei eine Recheneinrichtung der Küchenmaschine (1) aus einem mittels der Wägeeinrichtung (4) gemessenen Messwert ein Gewicht ermittelt, **dadurch gekennzeichnet, dass** die Recheneinrichtung anhand mindestens zweier zu verschiedenen Zeitpunkten ermittelter Gewichte einen zeitlichen Gewichtsgradienten ermittelt.

2. Verfahren nach Anspruch 1, **dadurch gekennzeichnet, dass** die Recheneinrichtung den Gewichtsgradienten mit einem definierten Referenzgradienten vergleicht, welcher eine zeitabhängige Gewichtsreduzierung durch Abheben der Küchenmaschine (1) von einer Stellfläche (5) charakterisiert.

3. Verfahren nach Anspruch 2, **dadurch gekennzeichnet, dass** der Referenzgradient geringer ist als ein bei Trennen des Zubereitungsgefäßes (3) von dem Basisgerät (2) auftretender Gewichtsgradient.

4. Verfahren nach Anspruch 2 oder 3, **dadurch gekennzeichnet, dass** bei Unterschreiten des Referenzgradienten durch den ermittelten Gewichtsgradienten auf ein Anheben der Küchenmaschine (1) geschlossen wird.

5. Verfahren nach einem der vorhergehenden Ansprüche, **dadurch gekennzeichnet, dass** für die Ermittlung des Gewichtsgradienten Messwerte herangezogen werden, deren Messzeitpunkte um höchstens 0,5 Sekunden beabstandet sind.

6. Verfahren nach einem der Ansprüche 2 bis 5, **dadurch gekennzeichnet, dass** nach Unterschreiten des Referenzgradienten zeitlich beabstandet mindestens zwei weitere Gewichtsgradienten, insbesondere in einem zeitlichen Abstand von mindestens 0,5 Sekunden, ermittelt werden.

7. Verfahren nach Anspruch 6, **dadurch gekennzeichnet, dass** bei zeitlich aufeinanderfolgender Ermittlung eines Gewichtsgradienten im Bereich des Referenzgradienten, insbesondere bei zeitlich im Wesentlichen konstanten aufeinanderfolgenden Messsignalen, auf einen Nichtbetrieb des Elektromotors geschlossen wird.

8. Verfahren nach Anspruch 6 oder 7, **dadurch gekennzeichnet, dass** bei Ermittlung zeitlich aufeinanderfolgender Gewichtsgradienten im Bereich des vor einem Unterschreiten des Referenzgradienten ermittelten Gewichtsgradienten auf einen Betrieb des Elektromotors geschlossen wird.

9. Verfahren nach Anspruch 7 oder 8, **dadurch gekennzeichnet, dass** einem Nutzer bei Erkennen eines Nichtbetriebs des Elektromotors eine Option zum Einschalten eines Transportmodus und/oder zum Ausschalten der Küchenmaschine (1) bereitgestellt wird, und/oder dass einem Nutzer bei Erkennen eines Betriebs des Elektromotors eine Option zum Ausschalten des Elektromotors bereitgestellt wird.

10. Elektromotorisch betriebene Küchenmaschine (1) mit einem einen Elektromotor aufweisenden Basisgerät (2), einer Recheneinrichtung und einem an einer Gefäßaufnahme des Basisgerätes (2) anordenbaren Zubereitungsgefäß (3), wobei der Gefäßaufnahme eine ein Gewicht des Zubereitungsgefäßes (3) aufnehmende Wägeeinrichtung (4) zugeordnet ist, **dadurch gekennzeichnet, dass** die Recheneinrichtung ausgebildet und eingerichtet ist, ein Verfahren gemäß einem der vorhergehenden Ansprüche durchzuführen.
